**Europäisches Patentamt**

(19) **European Patent Office**

**Office européen des brevets**

(11) Publication number: **0 277 841**
**A2**

(12) # EUROPEAN PATENT APPLICATION

(21) Application number: **88300998.7**

(22) Date of filing: **05.02.88**

(51) Int. Cl.⁴: **C 01 B 15/023**

(30) Priority: **05.02.87 ZA 870848**

(43) Date of publication of application:
**10.08.88 Bulletin 88/32**

(84) Designated Contracting States:
**AT BE CH DE ES FR GB GR IT LI LU NL SE**

(71) Applicant: **BRITISH INDUSTRIAL PLASTICS (S.A.)**
**(PROPRIETARY) LIMITED**
**47 Gillitts Road**
**Pinetown Natal Province (ZA)**

(72) Inventor: **Conway, Kevin James**
**3 Fairview Road**
**Kloof Natal Province (ZA)**

(74) Representative: **Pendlebury, Anthony et al**
**Page, White & Farrer 5 Plough Place New Fetter Lane**
**London EC4A 1HY (GB)**

(54) **A method of producing hydrogen peroxide.**

(57) A process for the production of hydrogen peroxide by the anthraquinone process includes hydrogenating an anthraquinone to an anthrahydroquinone and then oxidising the anthrahydroquinone to regenerate the anthraquinone while forming hydrogen peroxide. This process employes a working solution including one or more solvents in which the anthraquinone and anthrahydroquinone are dissolved, it being particularly anticipated to use a solvent comprising a halogenated hydrocarbon.

EP 0 277 841 A2

**Description**

## A METHOD OF PRODUCING HYDROGEN PEROXIDE

THIS INVENTION relates to a process for the production of hydrogen peroxide.

In the known anthraquinone process for the production of hydrogen peroxide, an anthraquinone such as alkyl anthraquinone, is dissolved in a solvent to form a working solution, and the alkyl anthraquinone is hydrogenated in the presence of a catalyst to form the corresponding alkyl anthrahydroquinone which, after the separation of the catalyst, is oxidized by means of an oxygen-containing gas to produce hydrogen peroxide. The alkyl anthraquinone is regenerated during the oxidation step and is recycled to the hydrogenation step after first removing the product hydrogen peroxide by extraction with water. During the successive recyclings, the anthraquinone is partly converted into the corresponding tetrahydroanthraquinone which in turn can give hydrogen peroxide through successive reduction and oxidation. In the anthraquinone process, one mole of hydrogen peroxide is obtained for each mole of anthrahydroquinone present in the working solution. To maximize hydrogen peroxide yield, it is therefore important that the starting alkyl anthraquinone and the corresponding alkyl anthrahydroquinone be highly soluble in the solvent. It is also important to utilize a solvent which has a high partition coefficient governing the equilibrium concentration of hydrogen peroxide in the water phase to that in the organic phase, when extracting the product from the organic solvent.

The solvents used in the anthraquinone process have most advantageously been single-phase, two-component mixtures in which one component is present primarily to promote the dissolution in the solvent of the anthraquinone, and the other to promote the dissolution in the solvent of the anthrahydroquinone. Both components should be insoluble or sparingly soluble in water to permit an efficient extraction of hydrogen peroxide from the organic solvent in the aqueous phase.

Known solvents have not always proved entirely satisfactory insofar as the quantity of hydrogen peroxide produced has always remained relatively limited and a vacuum distilling and/or other upgrading process has often been simultaneously required. It is thus an object of the invention to provide more suitable solvents for use in the above process for the production of hydrogen peroxide.

According to the invention, in a process for the production of hydrogen peroxide by the anthraquinone process, in which an anthraquinone is hydrogenated to an anthrahydroquinone, and the anthrahydroquinone is oxidised to regenerate the anthraquinone with the formation of hydrogen peroxide, employing a working solution comprising a solvent in which the anthraquinone and anthrahydroquinone are dissolved, there is provided the improvement comprising using a solvent comprising a halogenated hydrocarbon.

Preferably, the solvent is a two-component single-phase mixture in which the halogenated hydrocarbon forms a component which promotes dissolution of the antrhaquinone, the other component promoting dissolution of the anthrahydroquinone.

Also according to the invention, in a process for the production of hydrogen peroxide by the anthraquinone process, in which an anthraquinone is hydrogenated to an anthrahydroquinone, and the anthrahydroquinone is oxidised to regenerate the anthraquinone with the formation of hydrogen peroxide, the anthraquinone and the anthrahydroquinone being dissolved in a single solvent phase comprising two components which are liquid at ambient temperature and pressure, one of which promotes dissolution of the anthraquinone and the other of which promotes dissolution of the anthrahydroquinone, the improvement which consists in employing as the liquid component for dissolution of the anthraquinone a halogenated hydrocarbon of boiling point at least 60°C under atmospheric pressure.

The halogenated hydrocarbon may be a mono-, di-, tri, etc. halogen substitution product. The halogen may be at least one of fluorine, chlorine, bromine, or iodine.

The halogenated hydrocarbon may be selected from the group consisting of halogenated saturated acyclic hydrocarbons and halogenated unsaturated acyclic hydrocarbons.

The halogenated hydrocarbon may be chloroform having a boiling point of 61°C or trichlorethylene having a boiling point of 87°C or tetrachloroethylene having a boiling point of 121°C.

The component for promoting the dissolution of the anthrahydroquinone may be a conventional solvent known in the art. Preferably, it may be selected from the group consisting of dibutylpropionamide and tributyl phosphate.

Conveniently, the proportions by volume of the halogenated hydrocarbon component to the component for the anthrahydroquinone in the working solution are from 20:1 to 1:20.

It will be appreciated that mixtures of halogenated hydrocarbons may be used in the working solution, optionally mixed with previously known solvent components for the anthraquinone. Also, mixtures of solvent components for the anthrahydroquinone may be used.

The anthraquinone may be an alkyl anthraquinone such as 2-ethyl anthraquinone, 2-t-butyl anthraquinone or 2-amyl anthraquinone, or mixtures thereof, as well as their tetrahydro derivatives.

Typically, the working solution will be saturated with the anthraquinone and the anthrahydroquinone.

The invention extends to hydrogen peroxide when produced by the process described hereinbefore.

The invention will now be described, by way of example, with reference to the following non-limiting illustrative Examples.

## EXAMPLE 1

A working solution containing 250 g/l of 2-ethyl anthraquinone dissolved in 60/40 by volume mixture of chloroform and tributyl phosphate was hydrogenated in the presence of palladium at 40°C until 50% of the 2-ethyl anthraquinone was present as the 2-ethyl anthrahydroquinone. The solution was oxidizing by gassing with oxygen in a continuous recycling apparatus until no more oxygen was absorbed. The hydorgen peroxide was extracted from the working solution with water and tested quantitatively. This indicated that the working solution contained 18 g/l of hydrogen peroxide product.

## EXAMPLE 2

A working solution containing 250 g/l of 2-ethyl anthraquinone, dissolved in a 80/20 by volume mixture of tetrachloroethylene and dibutylpropionamide was hydrogenated in the presence of palladium at 45°C until 50% of the 2-ethyl anthraquinone was present as the 2-ethyl anthrahydroquinone, and oxidized by gassing with oxygen in a continuous recycling apparatus until no more oxygen was absorbed, to produce a concentration of hydrogen peroxide in the working solution of 18 g/l. The hydrogen peroxide was extracted continuously from the working solution in a seven-stage liquid-liquid extractor, yielding a 47% m/v concentration of product in aqueous solution.

It is an advantage of the invention that the halogenated hydrocarbons have the following properties as solvents or solvent components for the anthraquinone in the anthraquinone process:

> (a) high solubilities of 2- alkyl anthraquinones and the corresponding 2-alkyl tetrahydroanthraquinones up to 600g g/l;
>
> (b) substantial insolubility in water;
>
> (c) high partition coefficient of hydrogen peroxide in aqueous to organic solvent phase; and
>
> (d) non-flammability of at least the higher halogenated hydrocarbons.

The non-flammability of the higher halogenated hydrocarbons such as chloroform and tetrachloroethylene perchloroethylene is important in view of the notorious fire hazard which is inherent in the cyclic anthraquinone process for the production of hydrogen peroxide.

An advantage of the high solubility of eg 2-alkyl anthraquinone in halogenated hydrocarbos such as chloroform and tetrachloroethylene is that when used with an appropriate solvent component for the anthrahydroquinone, the concentration of hydrogen peroxide in the organic phase can reach concentrations up to 28 g/l in the case of chloroform, and up to 22g/l in the case of tetrachloroethylene. Both of the abovementioned halogenated hydrocarbons may be used as the minor or major component of the solvent mixtures, depending on the properties of the second component used.

Generally, a partition coefficient for hydrogen peroxide concentration in aqueous to organic phase of up to 20 is considered exceptionally high for solvents conventionally employed in the anthraquinone process. However, for example, a two-component solvent mixture containing 80% by volume of tetrachloroethylene and 20% by volume of a suitable anthrahydroquinone component such as dibutylpropionamide or tributyl phosphate has a partition coefficient in excess of 43.

The high hydrogen peroxide concentration in the organic phase, coupled with the high partition coefficients of the solvents of the invention, permits a high concentration of hydrogen peroxide in aqueous solution to be obtained from the liquid-liquid extractor. The Applicant has found that aqueous solutions having concentrations in excess of 50% m/v hydrogen peroxide direct from the extractor can be achieved, avoiding the necessity for evaporating water by vacuum from the said aqueous solutions to obtain concentrations required commercially. It is thus a further advantage of the invention that concentration of impurities in commercial products can be avoided by eliminating the vacuum evaporation stage in the production of hydrogen peroxide.

It is a further advantage of the invention that said working solutions have high densities and low viscosities. For example, the working solution described in Example 2 has a density of 1.403 gm/l at 45°C, and a viscosity of 10 CPS at 40°C. A working solution having a high density difference from water is important for good and efficient separation of hydrogen peroxide product by liquid-liquid extraction, and a low viscosity permits fast hydrogenation, oxidation and filtration of the working solution.

## Claims

1. In a process for the production of hydrogen peroxide by the anthraquinone process, in which an anthraquinone is hydrogenated to an anthrahydroquinone, and the anthrahydroquinone is oxidised to regenerate the anthraquinone with the formation of hydrogen peroxide, employing a working solution comprising a solvent in which the anthraquinone and the anthrahydroquinone are dissolved, characterised in that a solvent is used which comprises a halogenated hydrocarbon.

2. A process as claimed in Claim 1, characterised in that the solvent is a two-component single-phase mixture in which the halogenated hydrocarbon forms a component which promotes dissolution of the anthraquinone, the other component promoting dissolution of the anthrahydroquinone.

3. A process for the production of hydrogen peroxide by the anthraquinone process, in which an anthraquinone is hydrogenated to an anthrahydroquinone, and the anthrahydroquinone is oxidised to regenerate the anthraquinone with the formation of hydrogen peroxide, the anthraquinone and the anthrahydroquinone being dissolved in a single solvent phase comprising two components which are liquid at ambient temperature and pressure, one of which promotes dissolution of the anthraquinone and the other of which promotes dissolution of the anthrahydroquinone, characterised in that the liquid employed for dissolution of the anthrquinone is a halogenated hydrocarbon of boiling point at least 60°C under atmospheric pressure.

4. A process as claimed in Claim 1, Claim 2, or Claim 3, characterised in that the halogenated hydrocarbon is selected from the group consisting of halogenated saturated acyclic hydrocarbons and halogenated unsaturated acyclic hydrocarbons.

5. A process as claimed in Claim 4, characterised in that the halogenated hydrocarbon is chloroform.

6. A process as claimed in Claim 4, characterised in that the halogenated hydrocarbon is tetrachloroethylene.

7. A process as claimed in any one of Claims 2 to 6 inclusive, characterised in that the component for the anthrahydroquinone is selected from the group consisting of dibutylpropionamide and tributyl phosphate.

8. A process as claimed in any one of Claims 2 to 7 inclusive, characterised in that the proportions by volume of the halogenated hydrocarbon component to the component for the anthrahydroquinone in the working solution are from 20:1 to 1:20.

9. Hydrogen peroxide when produced by the process as claimed in any one of Claims 1 to 9 inclusive.